# EUROPÄISCHE PATENTSCHRIFT

(11) **EP 3 666 449 B1**
(45) Veröffentlichungstag und Bekanntmachung des Hinweises auf die Patenterteilung: **09.02.2022**
(21) Anmeldenummer: 18212255.6
(22) Anmeldetag: 13.12.2018
(51) Int. Cl.: B23K 26/361, G01B 11/24, G01B 11/00

(54) **VERFAHREN UND VORRICHTUNG ZUM ENTGRATEN EINES VAKUUMPUMPENBAUTEILS**
METHOD AND DEVICE FOR DEBURRING A VACUUM PUMP COMPONENT
PROCÉDÉ ET DISPOSITIF D'ÉBARBAGE D'UN COMPOSANT DE POMPE À VIDE

(43) Veröffentlichungstag der Anmeldung: 17.06.2020
(73) Patentinhaber: PFEIFFER VACUUM GMBH, 35614 Asslar (DE)
(72) Erfinder: Kahl, Joachim, 35584 Wetzlar (DE); Sieben, Daniel, 35440 Linden (DE)
(74) Vertreter: Manitz Finsterwald Patent- und Rechtsanwaltspartnerschaft mbB

(56) Entgegenhaltungen:
- EP-A1- 1 009 970
- EP-B1- 1 009 970
- CN-A- 103 286 454
- CN-A- 107 931 846
- US-A- 5 940 302
- US-A1- 2008 317 590

## Beschreibung

Die vorliegende Erfindung betrifft ein Verfahren und eine Vorrichtung zum Entgraten eines Vakuumpumpenbauteils mittels eines Lasers.

Es ist bekannt, Vakuumpumpenbauteile, wie beispielsweise Rotorscheiben, mittels eines Sägeprozesses zu fertigen. Aufgrund des Sägeschnitts können sich Grate an den Schnittkanten ausbilden, weshalb die Bauteile nachbearbeitet werden müssen. Handelt es sich bei den Bauteilen um Rotorscheiben, werden diese herkömmlicherweise manuell entgratet. Einzelne Schritte sehen hierbei vor, dass jeder Grat mit Hilfe eines Dreikantschabers einzeln verbogen und mit einem Schleifbock entfernt wird. Da das manuelle Verbiegen der Grate unter unterschiedlichen Anpressdrücken erfolgt, können ungleichmäßig entgratete Bauteilkanten entstehen. Das manuelle Entgraten ist demnach nicht nur zeit-, arbeits- und damit kostenintensiv, sondern zudem unpräzise.

Aus der CN 107 931 846 A und der CN 103 286 454 A sind Verfahren zur Laserentgratung bekannt, welche zur Bestimmung der Laserkoordinaten ein Bild des zu entgratenden Werkstücks aufnehmen und dieses mit Konstruktionsdaten des Werkstücks vergleichen. Die US 5 940 302 A offenbart ein Verfahren zur optischen Abtastung einer Oberfläche, welches dazu eingesetzt werden kann, Grate an bestimmten Positionen der Oberfläche zu detektieren. Aus der EP 1 009 970 A1 ist ein Verfahren zur Entfernung von Graten an Werkstückkanten bekannt. Die US 2008/317590 A1 beschreibt ein Verfahren zur Herstellung einer Statorscheibe für eine Turbomolekularpumpe, welches das Entgraten der Statorscheibe überflüssig macht.

Es ist eine Aufgabe der Erfindung, ein Verfahren und eine Vorrichtung zum Entgraten eines Vakuumpumpenbauteils zu schaffen, welches sich durch eine höhere Wirtschaftlichkeit auszeichnet.

Diese Aufgabe wird durch ein Verfahren mit den Merkmalen des Anspruchs 1 und durch eine Vorrichtung mit den Merkmalen des Anspruchs 10 gelöst.

Das erfindungsgemäße Verfahren umfasst die Schritte:
(i) Erfassen eines Bildes des Vakuumpumpenbauteils mittels einer Bilderfassungseinheit;
(ii) Ermitteln einer IST-Kontur des Vakuumpumpenbauteils anhand des Bildes;
(iii) Ermitteln einer SOLL-Kontur auf der Grundlage der IST-Kontur;
(iv) Umwandeln der SOLL-Kontur in Laserkoordinaten; und
(v) Entgraten des Vakuumpumpenbauteils mittels eines Lasers auf der Grundlage der Laserkoordinaten.

Der Erfindung liegt der allgemeine Gedanke zugrunde, das Vakuumpumpenbauteil zumindest teilautomatisch mit Hilfe eines Lasers zu entgraten.

Es handelt sich bei dem Vakuumpumpenbauteil um eine, insbesondere für eine Turbomolekularpumpe vorgesehene, Rotorscheibe.

Zu diesem Zweck wird in einem ersten Schritt ein Bild des Vakuumpumpenbauteils aufgenommen. Hierfür wird das Vakuumpumpenbauteil in der Nähe einer Bilderfassungseinheit angeordnet und vorteilhafterweise derart ausgerichtet, dass sich eine Stirnseite des Vakuumpumpenbauteils im Wesentlichen parallel zu einer Bilderfassungsebene erstreckt. Durch die parallele Ausrichtung des Vakuumpumpenbauteils zu der Bilderfassungsebene wird möglichen Bildverzerrungen vorgebeugt.

Das aufgenommene Bild wird anschließend verarbeitet, insbesondere mittels eines computerbasierten Bildverarbeitungsprogramms. Konkret wird anhand des aufgenommenen Bildes zunächst eine vorliegende IST-Kontur des Bauteils ermittelt. Unter der IST-Kontur ist in diesem Kontext die Kontur des noch unbearbeiteten Vakuumpumpenbauteils zu verstehen. Mit anderen Worten umfasst die IST-Kontur nicht nur bestehende Bauteilkanten, sondern zudem möglicherweise vorhandene Grate und Späne.

Auf der Grundlage der ermittelten IST-Kontur wird als nächstes eine gewünschte SOLL-Kontur ermittelt.

Das Ermitteln der SOLL-Kontur umfasst, dass mit einer Bauteilkante verbundene Elemente, insbesondere überlappende Grate und Späne, aus der IST-Kontur eliminiert werden. Unter verbundenen Elementen sind all diejenigen Elemente zu verstehen, welche insbesondere im Bereich der Stirnseite des Bauteils eine Verbindung zu der Bauteilkante aufweisen. Auch mit der Bauteilkante überlappende Späne, welche eigentlich getrennt von der Bauteilkante sind, werden als verbundene Elemente detektiert. Diese verbundenen Elemente werden aus der IST-Kontur eliminiert, um eine bereinigte Bauteilkante zu erhalten.

Um den Einsatz eines Lasers zur Entgratung des Vakuumpumpenbauteils zu ermöglichen, werden danach die Daten der SOLL-Kontur in Laserkoordinaten umgewandelt, mit denen der Laser anschließend derart angesteuert wird, dass er entlang den Laserkoordinaten und somit entsprechend der SOLL-Kontur Material des Vakuumpumpenbauteils entfernt, welches nicht von der SOLL-Kontur eingeschlossen wird.

Bevorzugt wird der Laser entsprechend der jeweiligen Anwendung gewählt und eingestellt. Parameter wie die Leistung, die Intensität und der Frequenzbereich des Lasers nehmen Einfluss auf die Schnitteigenschaften und damit auf das letztendliche Entgratungsergebnis. Der Laser kann beispielsweise derart gewählt und eingestellt werden, dass er lediglich eine gewünschte Materialdicke durchtrennt um weitere Bauteilsegmente nicht zu beschädigen. Der Laser kann selbst verständlich nicht nur an die Materialdicke, sondern zudem an das verwendete Material an sich, die gewünschte Schnitttiefe und ähnliches angepasst werden.

Vorteilhafte Ausführungsformen des erfindungsgemäßen Verfahrens sind den Unteransprüchen, der Beschreibung sowie den Zeichnungen zu entnehmen.

Gemäß einer Ausführungsform wird das Vakuumpumpenbauteil während der Bilderfassung belichtet. Die Belichtung wird insbesondere durch eine Lichtquelle ausgeführt, welche in die Bilderfassungseinheit integriert oder separat davon angeordnet sein kann. Durch die Belichtung des Vakuumpumpenbauteils kann eine Stirnseite des Vakuumpumpenbauteils derart ausgeleuchtet werden, dass möglichst alle Strukturen, insbesondere auch sehr feine Strukturen, des Vakuumpumpenbauteils durch die Bilderfassungseinheit erfasst werden.

Gemäß einer Weiterbildung ist vorgesehen, dass das Ermitteln der IST-Kontur umfasst, dass der Kontrast des erfassten Bildes erhöht wird. Durch die Kontrasterhöhung können einzelne Strukturen des Vakuumpumpenbauteils zusätzlich hervorgehoben werden. Insbesondere Grate und Späne sind oftmals sehr fein und können durch die Kontrasterhöhung besser im Bild sichtbar gemacht werden. Das Bild wird durch die Kontrasterhöhung somit ideal auf eine nachfolgende Konturerkennung vorbereitet.

Vorteilhafterweise umfasst das Ermitteln der IST-Kontur, dass eine Bauteilkante, Grate und Späne in dem erfassten Bild detektiert werden. Mit der Bauteilkante verbundene Elemente werden dabei als Grate eingestuft und davon losgelöste Elemente als Späne.

Gemäß einer weiteren Ausführungsform wird anhand der IST-Kontur eine Position des Vakuumpumpenbauteils bestimmt. Die Position des Vakuumpumpenbauteils wird insbesondere anhand eines Koordinatensystems bestimmt, welches dem erfassten Bild und damit der ermittelten IST-Kontur zugrunde liegt. Durch die Positionsbestimmung ist es möglich, den Laser genau anzusteuern und gegebenenfalls auch das Vakuumpumpenbauteil zwischen der Erfassung des Bildes und der Entgratung zu bewegen, ohne dass dies einen Einfluss auf das Ergebnis der Entgratung hat.

Vorteilhafterweise wird die IST-Kontur mit Hilfe eines nicht selektiven Kantenerkennungsalgorithmus ermittelt. Geeignete nicht selektive Kantenerkennungsalgorithmen sind grundsätzlich bekannt.

Gemäß einer weiteren Ausführungsform umfasst das Ermitteln der SOLL-Kontur, dass von einer Bauteilkante getrennte Elemente, insbesondere Grate und Späne, aus der IST-Kontur entfernt werden. Unter getrennten Elementen sind hier solche Strukturen zu verstehen, welche keine Verbindung zu der Bauteilkante des Vakuumpumpenbauteils aufweisen. Getrennte Elemente umfassen insbesondere Späne, welche bereits losgelöst von der Bauteilkante sind, oder Grate, welche nicht in der Ebene der Stirnseite mit dem Vakuumpumpenbauteil verbunden sind. Mit anderen Worten kann es sich hierbei um Grate handeln, die in einer Ebene unterhalb der Ebene der Stirnseite mit dem Vakuumpumpenbauteil verbunden sind und beispielsweise derart nach oben gebogen sind, dass ein oberer Teil des Grats von der Bilderfassungseinheit in der Ebene der Stirnseite erfasst wird. Die erfassten Grate können demnach wie lose Späne erscheinen, obwohl sie verbundene Grate sind.

Gemäß einer weiteren Ausführungsform wird die SOLL-Kontur mit Hilfe eines Erodieralgorithmus ermittelt. Mit Hilfe des Erodieralgorithmus können verbundene Elemente, insbesondere überlappende Grate und Späne, aus der IST-Kontur herausgerechnet werden. Geeignete Erodieralgorithmen sind grundsätzlich bekannt.

Während des eigentlichen Entgratens werden die erfassten Grate und Späne mit Hilfe des Lasers bevorzugt abgetrennt. Es wird demnach ein Laserschnitt und nicht etwa ein Auf- oder Umschmelzen des zu entfernenden Materials vorgenommen, um das Vakuumpumpenbauteil zu entgraten. Durch diesen abtrennenden Prozess wird eine besonders präzise und saubere Bauteilkante erzielt.

Da es bei einer Rotorscheibe während des Aussägens der Rotorschaufeln zu einem Aufbiegen der Rotorschaufeln kommen kann, besteht die Gefahr einer Varianz der Spaltbreite zwischen den einzelnen Rotorschaufeln, welche in den Daten, beispielsweise einer CAD-Datei, mittels derer das Vakuumpumpenbauteil gefertigt wurde, nicht vorgesehen ist. Folglich ist es insbesondere bei der Entgratung von Rotorscheiben vorteilhaft, eine individuelle IST-Kontur des Bauteils zu bestimmen, auf deren Grundlage die SOLL-Kontur ermittelt wird. Es versteht sich, dass im Falle eines idealen Fertigungsprozesses die ermittelte SOLL-Kontur den CAD-Daten entsprechen würde.

Da die Rotorschaufeln der Rotorscheibe zumindest teilweise überlappen können, ist es vorteilhaft, während des Entgratens eine unter der zu bearbeitenden Rotorschaufel liegende Rotorschaufel zu schützen. Hierfür kann eine auf die Rotorscheibe abgestimmte Abschirmung eingesetzt werden. Alternativ oder zusätzlich ist es möglich, den Laser derart auf die überlappenden Rotorschaufeln abzustimmen, dass eine tiefer liegende Rotorschaufel nicht von dem Laser beeinflusst wird. Es versteht sich, dass eine solche Abschirmung bzw. Abstimmung des Lasers nicht nur für Rotorscheiben, sondern generell für jedes zu entgratende Vakuumpumpenbauteil infrage kommt.

Nachfolgend wird die Erfindung rein beispielhaft anhand einer vorteilhaften Ausführungsform unter Bezugnahme auf die beigefügten Figuren beschrieben. Der Schutzumfang der Erfindung wird nur durch die angehängten Ansprüche bestimmt.

### Es zeigen:

- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine erfindungsgemäße Vorrichtung zur Durchführung des erfindungsgemäßen Verfahrens,
- Fig. 7: schematisch ein erfasstes Bild einer Rotorscheibe der Turbomolekularpumpe von Fig. 1,
- Fig. 8: das Bild von Fig. 7 mit erhöhtem Kontrast,
- Fig. 9: eine IST-Kontur der Rotorscheibe von Fig. 7,
- Fig. 10: die IST-Kontur von Fig. 9 nach dem Entfernen von getrennten Elementen,

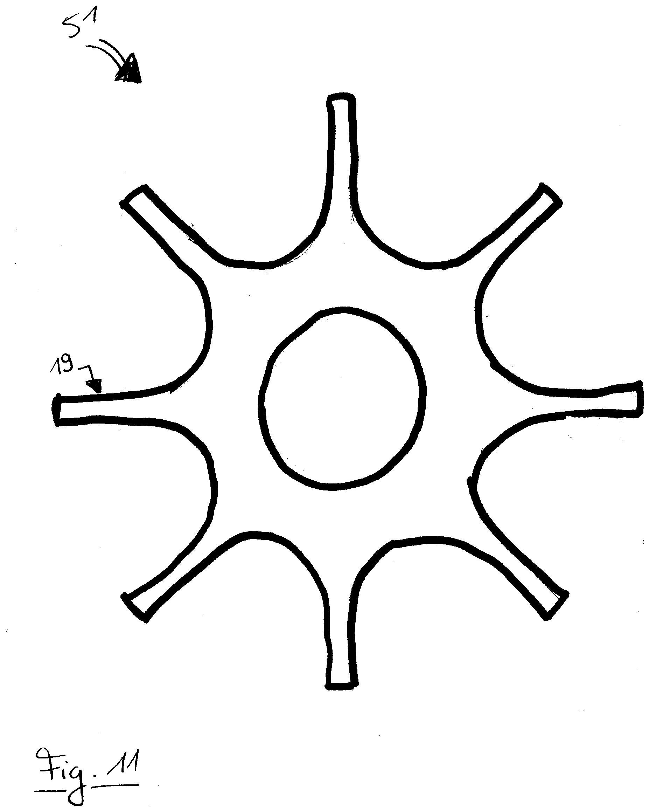

- Fig. 11: eine ermittelte SOLL-Kontur der Rotorscheibe von Fig. 7.

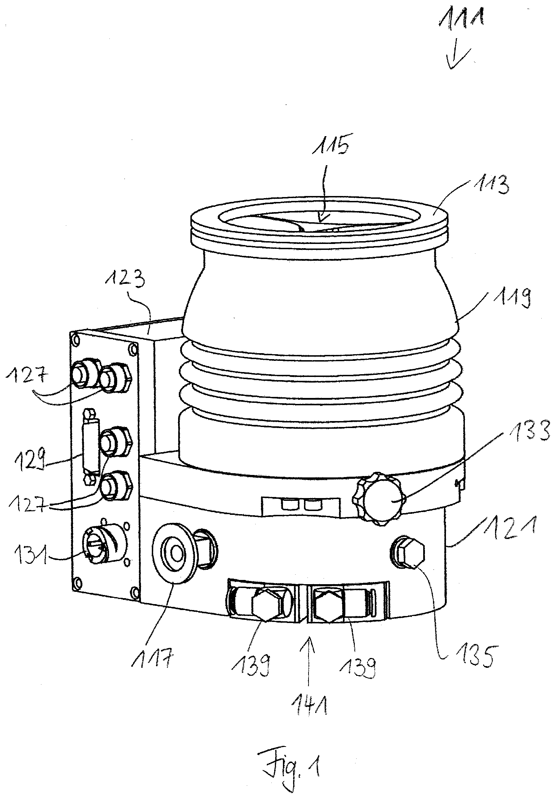

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

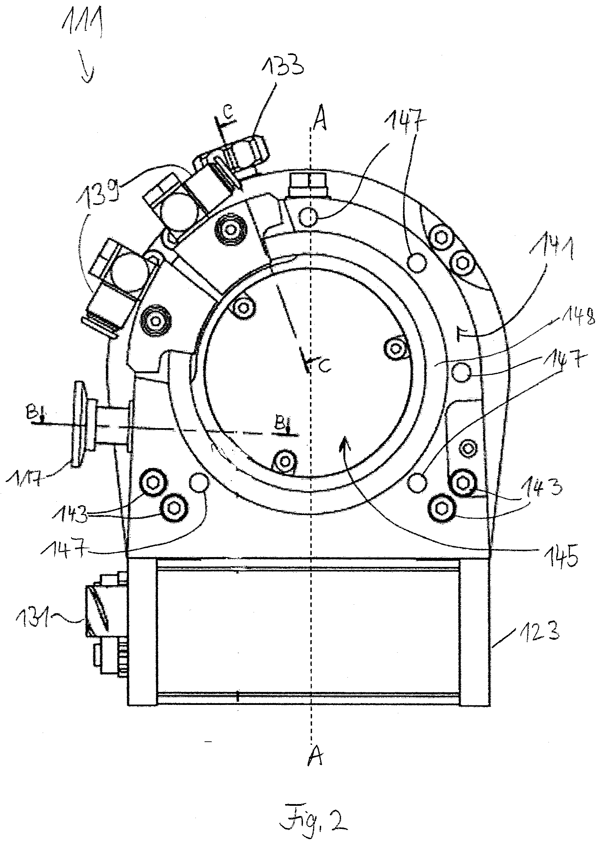

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

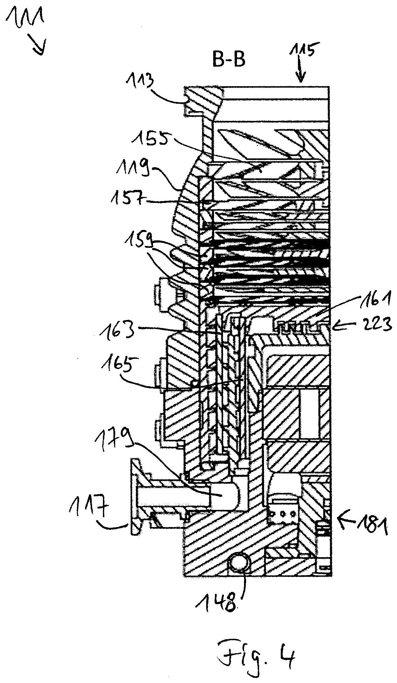

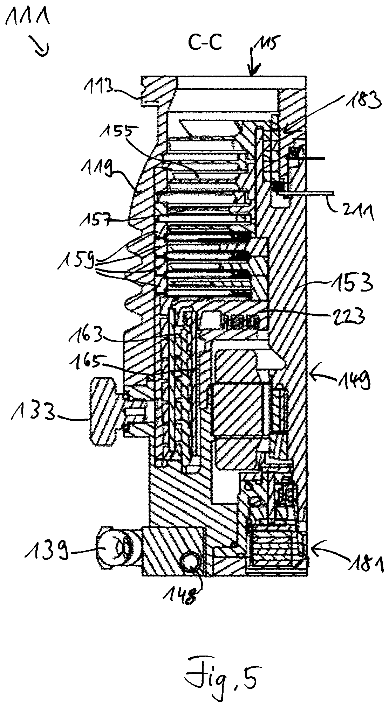

In den Figuren 2 bis 5 ist eine Kühlmittelleitung 148 dargestellt, in welcher das über die Kühlmittelanschlüsse 139 ein- und ausgeleitete Kühlmittel zirkulieren kann.

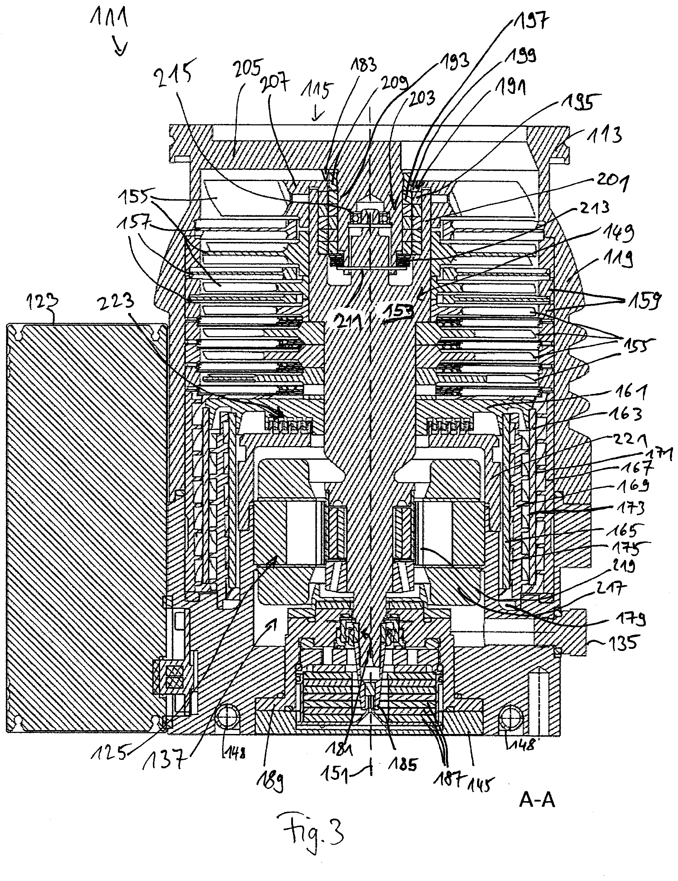

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

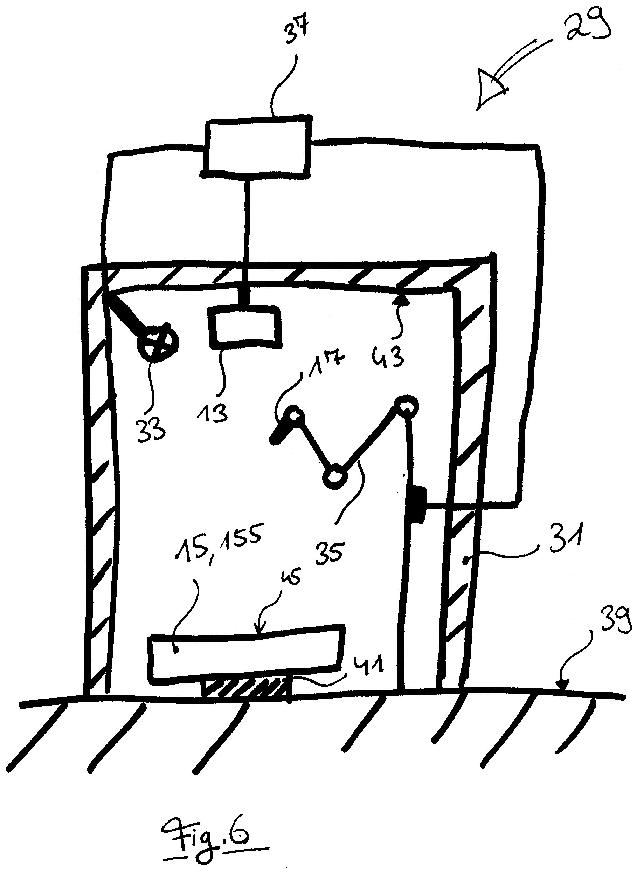

In Fig. 6 ist eine Vorrichtung 29 gezeigt, mittels welcher eine Rotorscheibe 155 der voranstehend beschriebenen Turbomolekularpumpe 111 entgratet werden kann.

Die Vorrichtung 29 umfasst einen an einem Roboterarm 35 befestigten Laser 17, eine Lichtquelle 33, eine Bilderfassungseinheit 13, eine Steuereinheit 37 und einen Träger 41 für die Rotorscheibe 155. Die Steuereinheit 37 ist mit der Lichtquelle 33, der Bilderfassungseinheit 13, dem Roboterarm 35 und dem Laser 17 verbunden, um diese zu steuern.

Im dargestellten Ausführungsbeispiel ist die Lichtquelle 33 zu der Bilderfassungseinheit 13 beabstandet und derart relativ zu der auf dem Träger 41 platzierten Rotorscheibe 155 positioniert, dass eine Stirnseite 45 der Rotorscheibe 155, vorzugsweise über ihre gesamte Fläche, ausgeleuchtet werden kann. Die Lichtquelle 33 könnte aber auch in die Bilderfassungseinheit 13 integriert sein. Außerdem können mehr als eine Lichtquelle 33 vorgesehen sein.

Ferner handelt es sich im dargestellten Ausführungsbeispiel bei der Vorrichtung 29 um einen festen Aufbau, in welchem die Rotorscheibe 155 zu Beginn des Verfahrens positioniert und aus welchem die Rotorscheibe 155 erst nach Beendigung des Verfahrens wieder entnommen wird. Grundsätzlich kann der Aufbau der Vorrichtung 29 von dem hiergezeigten Aufbau aber auch abweichen. Beispielsweise könnte der Laser 17 von der Bilderfassungseinheit 13 derart entfernt angeordnet sein, dass die Rotorscheibe 155 nach der Bilderfassung zu dem Laser 17 hin transportiert und neu positioniert werden muss, damit der Laser 17 die Rotorscheibe 155 bearbeiten kann.

Des Weiteren sind die Komponenten der Vorrichtung 29 gemäß dem vorliegenden Ausführungsbeispiel mit Ausnahme der Steuereinheit 37 alle in einem gemeinsamen Gehäuse 31 untergebracht. Es ist jedoch möglich, auch die Steuereinheit 37 innerhalb des Gehäuses 31 anzuordnen. Das Gehäuse 31 dient unter anderem der Befestigung der Bilderfassungseinheit 13 und der Lichtquelle 33, welche an einer Gehäusedecke 43 angeordnet sind. Auch zu einer verbesserten Abdunkelung für eine optimale Belichtung mittels der Lichtquelle 33 trägt das Gehäuse 31 bei. Grundsätzlich könnte auf das Gehäuse 31 aber auch verzichtet werden.

Nachfolgend wird das Entgraten der Rotorscheibe 155 mittels der Vorrichtung 29 beschrieben.

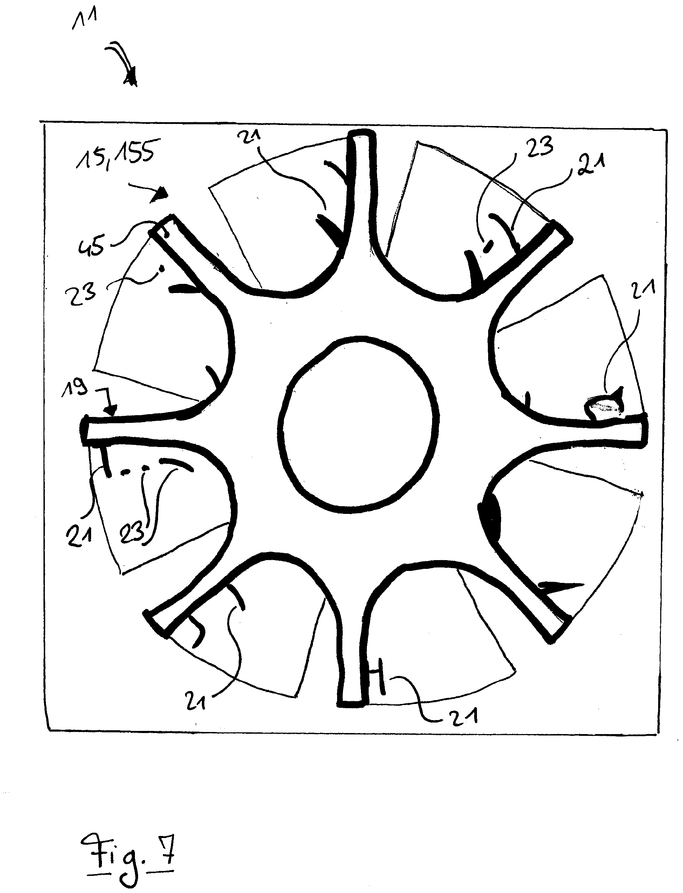

Zunächst wird die Rotorscheibe 155 auf dem Träger 41 positioniert. Als nächstes erfasst die Bilderfassungseinheit 13 ein Bild 11 (Fig. 7) der Rotorscheibe 155, während diese durch die Lichtquelle 33 angestrahlt wird. Durch die Belichtung mittels der Lichtquelle 33 ist eine Stirnseite 45 der Rotorscheibe 155 vollständig ausgeleuchtet.

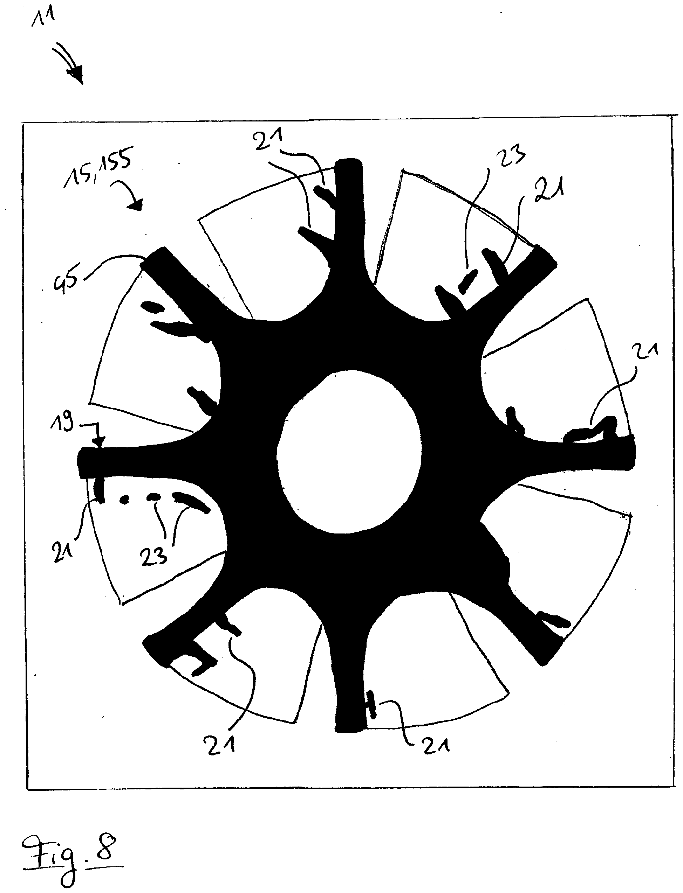

Anschließend wird das erfasste Bild 11 von Fig. 7 in der Steuereinheit 37 verarbeitet. Insbesondere wird zunächst der Kontrast des Bildes 11 erhöht. Das resultierende Bild 11 mit erhöhtem Kontrast ist in Fig. 8 dargestellt. Durch die Kontrasterhöhung wird das Bild 11 für eine Konturerkennung vorbereitet, indem hierdurch Bauteilkanten 19, Grate 21 und Späne 23 besser detektiert werden können.

Als nächstes wird aus dem Bild 11 mit erhöhtem Kontrast unter Verwendung eines nicht selektiven Kantenerkennungsalgorithmus eine IST-Kontur der Rotorscheibe 155 ermittelt, welche Bauteilkanten 19, Grate 21 und Späne 23 umfasst. Mit anderen Worten werden die Umrisse der Rotorscheibe 155 und der Grate 21 und Späne 23 herausgearbeitet und digitalisiert.

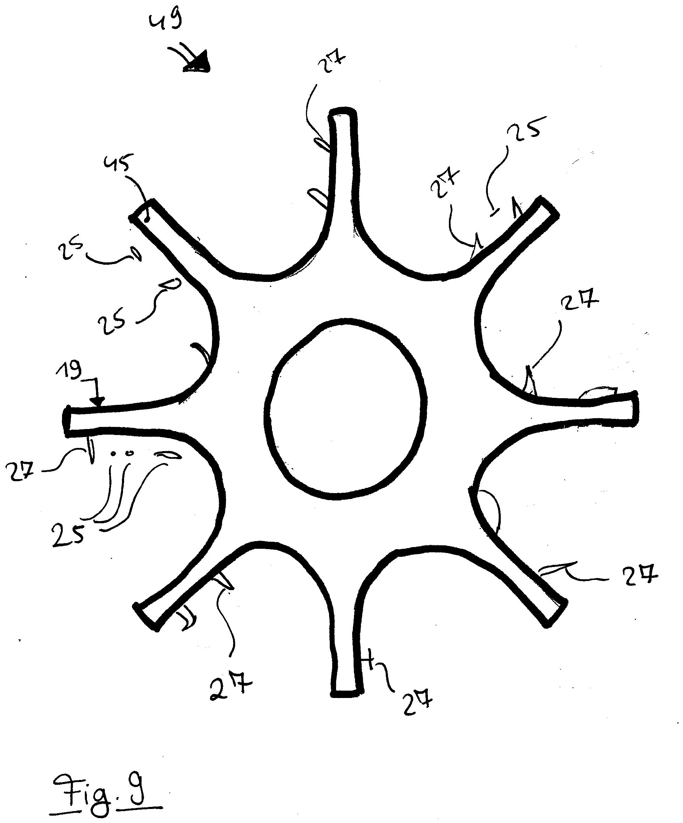

Das Ergebnis der Anwendung des nicht selektiven Kantenerkennungsalgorithmus ist in Fig. 9 gezeigt. Hierbei handelt es sich nun nicht mehr um das aufgenommene und/oder bearbeitete Bild 11, sondern um eine digitale Darstellung der IST-Kontur 49 der Rotorscheibe 155.

Dabei umfasst die IST-Kontur 49 sowohl von der Bauteilkante 19 getrennte Elemente 25 als auch mit der Bauteilkante 19 verbundene Elemente 27. Bei den getrennten Elementen 25 handelt es sich vor allem um solche Späne 23 oder Grate 21, welche in der Ebene der Stirnseite 45 nicht mit der Rotorscheibe 155 in Kontakt stehen. Bei den verbundenen Elementen 27 kann es sich hingegen um Grate 21 handeln, die in der Ebene der Stirnseite 45 eine Verbindung zu einer Bauteilkante 19 aufweisen, oder um Späne 23, die mit einer Bauteilkante 19 überlappen. Mit anderen Worten können losgelöste Späne 23 zumindest teilweise auf der Stirnseite 45 aufliegen und in dem erfassten Bild 11 und der daraus ermittelten IST-Kontur 49 wie mit der Bauteilkante 19 verbundene Elemente 27 erscheinen.

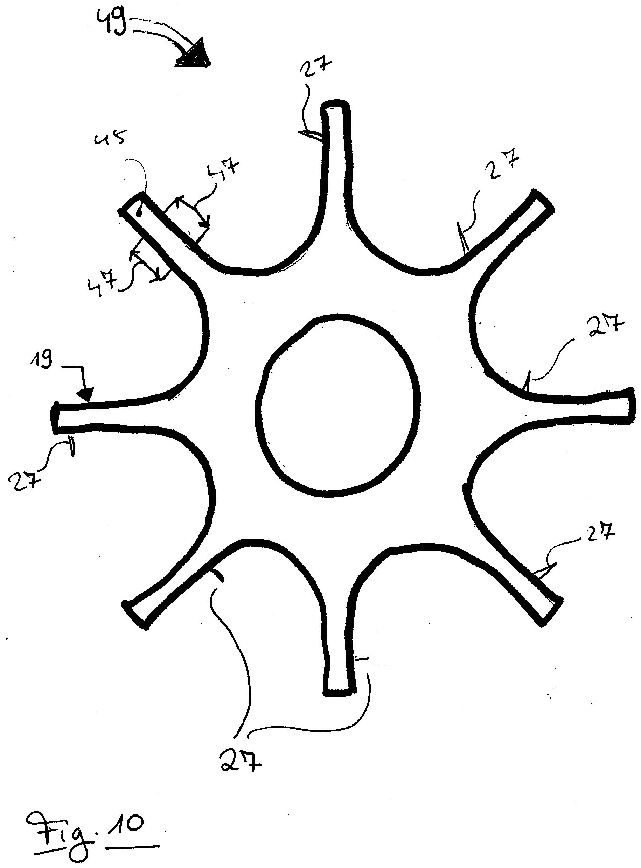

In einem nächsten Schritt werden die von der Bauteilkante 19 getrennten Elemente 25 aus der IST-Kontur entfernt. Eine dementsprechende überarbeitetet IST-Kontur 49 ist in Fig. 10 gezeigt.

Anschließend werden die verbundenen Elemente 27 mittels eines Erodieralgorithmus rechnerisch aus der IST-Kontur 49 entfernt. Genauer gesagt werden alle Elemente aus der IST-Kontur herausgerechnet, die weder eine Mindestdicke erfüllen, noch einer langen zusammenhängenden Struktur, wie beispielsweise einer Bauteilkante 19, angehören. Die Mindestdicke kann beispielsweise aus zwei im Wesentlichen parallel angeordneten Bauteilkantenabschnitten 47 bestimmt werden.

Das Entfernen der getrennten Elemente 25 zeitlich gesehen vor den verbundenen Elementen 27 ist deshalb vorteilhaft, weil zum einen das Entfernen der getrennten Elemente 25 einfacher ist und zum anderen dadurch das Entfernen der verbundenen Elemente 27 vereinfacht wird.

Durch die Ausführung des Erodieralgorithmus erhält man aus der IST-Kontur 49 eine SOLL-Kontur 51, welche anschließend in Laserkoordinaten umgewandelt wird.

Für den eigentlichen Entgratungsschritt werden schließlich der Roboterarm 35 und der daran angebrachte Laser 17 von der Steuereinheit 37 derart angesteuert, dass der Laser 17 auf der Grundlage der ermittelten Laserkoordinaten die gewünschte SOLL-Kontur 51 abfährt und vorhandene Grate 19 und Späne 21 von der Rotorscheibe 155 tatsächlich abschneidet.

Die SOLL-Kontur 51 entspricht in dem gezeigten Ausführungsbeispiel im Wesentlichen der IST-Kontur 49 ohne Grate 19 und Späne 21. Es ist jedoch auch möglich, dass die SOLL-Kontur zusätzlich eine veränderte Bauteilkante 19 umfasst. Mit anderen Worten kann durch die SOLL-Kontur auch eine neue Bauteilkante 19 definiert werden, wobei der Laser 17 bei der Entgratung nicht nur die Grate 21 und Späne 23 entfernen, sondern zudem einen Schnitt im Vollmaterial der Rotorscheibe 155 vornimmt. Hierdurch kann beispielsweise der Verlauf und/oder die Lage einer Bauteilkante 19 verändert werden, indem einzelne Strukturen verschmälert, Ecken abgerundet oder ähnliche Veränderungen vorgenommen werden.

Es versteht sich, dass der Laser 17 auch für weitere Prozessschritte wie zum Beispiel eine Laserbeschriftung der Rotorscheibe 155 verwendet werden kann.

### Bezugszeichenliste

- 11: Bild
- 13: Bilderfassungseinheit
- 15: Vakuumpumpenbauteil
- 17: Laser
- 19: Bauteilkante
- 21: Grat
- 23: Span
- 25: getrenntes Element
- 27: verbundenes Element
- 29: Vorrichtung
- 31: Gehäuse
- 33: Lichtquelle
- 35: Roboterarm
- 37: Steuereinheit
- 39: Boden
- 41: Träger
- 43: Gehäusedecke
- 45: Stirnseite
- 47: Bauteilkantenabschnitt
- 49: IST-Kontur
- 51: SOLL-Kontur
- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

## Patentansprüche

1. Verfahren zum Entgraten eines Vakuumpumpenbauteils (15) mit den Schritten:
(i) Erfassen eines Bildes (11) des Vakuumpumpenbauteils (15) mittels einer Bilderfassungseinheit (13);
(ii) Ermitteln einer IST-Kontur (49) des Vakuumpumpenbauteils (15) anhand des Bildes (11);
(iii) Ermitteln einer SOLL-Kontur (51) auf der Grundlage der IST-Kontur (49);
(iv) Umwandeln der SOLL-Kontur (51) in Laserkoordinaten; und
(v) Entgraten des Vakuumpumpenbauteils (15) mittels eines Lasers (17) auf der Grundlage der Laserkoordinaten,
**dadurch gekennzeichnet, dass**
das Vakuumpumpenbauteil (15) eine Rotorscheibe (155) ist, und dass
das Ermitteln der SOLL-Kontur (51) umfasst, dass mit einer Bauteilkante (19) verbundene Elemente (27), insbesondere Grate (21) und überlappende Späne (23), aus der IST-Kontur (49) eliminiert werden, indem alle Elemente aus der IST-Kontur (46) herausgerechnet werden, die weder eine Mindestdicke erfüllen, noch einer langen zusammenhängenden Struktur, wie beispielsweise einer Bauteilkante (19), angehören.

2. Verfahren nach Anspruch 1,
**dadurch gekennzeichnet, dass**
das Vakuumpumpenbauteil (15) während der Bilderfassung belichtet wird.

3. Verfahren nach Anspruch 1 oder 2,
**dadurch gekennzeichnet, dass**
das Ermitteln der IST-Kontur (49) umfasst, dass der Kontrast des erfassten Bildes (11) erhöht wird.

4. Verfahren nach zumindest einem der vorhergehenden Ansprüche,
**dadurch gekennzeichnet, dass**
das Ermitteln der IST-Kontur (49) umfasst, dass Bauteilkanten (19), Grate (21) und Späne (23) in dem erfassten Bild (11) detektiert werden.

5. Verfahren nach zumindest einem der vorhergehenden Ansprüche,
**dadurch gekennzeichnet, dass**
anhand der IST-Kontur (49) eine Position des Vakuumpumpenbauteils (15) bestimmt wird.

6. Verfahren nach zumindest einem der vorhergehenden Ansprüche,
**dadurch gekennzeichnet, dass**
die IST-Kontur (49) mit Hilfe eines nicht selektiven Kantenerkennungsalgorithmus ermittelt wird.

7. Verfahren nach zumindest einem der vorhergehenden Ansprüche,
**dadurch gekennzeichnet, dass**
das Ermitteln der SOLL-Kontur (51) umfasst, dass von einer Bauteilkante (19) getrennte Elemente (25), insbesondere Grate (21) und Späne (23), aus der IST-Kontur (49) entfernt werden.

8. Verfahren nach zumindest einem der vorhergehenden Ansprüche,
**dadurch gekennzeichnet, dass**
die SOLL-Kontur (51) mit Hilfe eines Erodieralgorithmus ermittelt wird.

9. Verfahren nach zumindest einem der vorhergehenden Ansprüche,
**dadurch gekennzeichnet, dass**
Grate (21) und Späne (23) mit Hilfe des Lasers (17) abgetrennt werden.

10. Vorrichtung (29) zum Entgraten einer Rotorscheibe (155), umfassend:
eine Bilderfassungseinheit (13) zum Erfassen eines Bildes (11) der Rotorscheibe (155),
einen Laser (17) und
eine mit der Bilderfassungseinheit (13) und dem Laser (17) verbundene Steuereinheit (37), welche dazu ausgebildet ist, anhand des Bildes (11) eine IST-Kontur (49) der Rotorscheibe (155) zu ermitteln und auf Grundlage der IST-Kontur (49) eine SOLL-Kontur (51) zu ermitteln, **dadurch gekennzeichnet, dass** das Ermitteln der SOLL-Kontur (51) umfasst, dass mit einer Bauteilkante (19) verbundene Elemente (27), insbesondere Grate (21) und überlappende Späne (23), aus der IST-Kontur (49) eliminiert werden, indem alle Elemente aus der IST-Kontur (46) herausgerechnet werden, die weder eine Mindestdicke erfüllen, noch einer langen zusammenhängenden Struktur, wie beispielsweise einer Bauteilkante (19), angehören und
wobei die Steuereinheit (37) dazu ausgebildet ist, die SOLL-Kontur (51) in Laserkoordinaten umzuwandeln und den Laser (17) auf Grundlage der Laserkoordinaten zum Entgraten der Rotorscheibe (155) anzusteuern.

## Claims

1. A method of deburring a vacuum pump component (15) comprising the steps:
(i) capturing an image (11) of the vacuum pump component (15) by means of an image capture unit (13);
(ii) determining an ACTUAL contour (49) of the vacuum pump component (15) based on the image (11);
(iii) determining a DESIRED contour (51) on the basis of the ACTUAL contour (49);
(iv) converting the DESIRED contour (51) into laser coordinates; and
(v) deburring the vacuum pump component (15) by means of a laser
(17) on the basis of the laser coordinates,
**characterized in that**
the vacuum pump component (15) is a rotor disk (155), and **in that** the determination of the DESIRED contour (51) comprises elements (27) connected to a component edge (19), in particular burrs (21) and overlapping chips (23), being eliminated from the ACTUAL contour (49) by calculating out all the elements from the ACTUAL contour (46) which neither meet a minimum thickness nor belong to a long contiguous structure such as a component edge (19).

2. A method in accordance with claim 1,
**characterized in that**
the vacuum pump component (15) is exposed during the image capture.

3. A method in accordance with claim 1 or claim 2,
**characterized in that**
the determination of the ACTUAL contour (49) comprises the contrast of the captured image (11) being increased.

4. A method in accordance with at least one of the preceding claims, **characterized in that**
the determination of the ACTUAL contour (49) comprises component edges (19), burrs (21) and chips (23) being detected in the captured image (11).

5. A method in accordance with at least one of the preceding claims, **characterized in that**
a position of the vacuum pump component (15) is determined on the basis of the ACTUAL contour (49).

6. A method in accordance with at least one of the preceding claims, **characterized in that**
the ACTUAL contour (49) is determined by means of a non-selective edge recognition algorithm.

7. A method in accordance with at least one of the preceding claims, **characterized in that**
the determination of the DESIRED contour (51) comprises elements (25) separated from a component edge (19), in particular burrs (21) and chips (23), being removed from the ACTUAL contour (49).

8. A method in accordance with at least one of the preceding claims, **characterized in that**
the DESIRED contour (51) is determined by means of an erosion algorithm.

9. A method in accordance with at least one of the preceding claims, **characterized in that**
burrs (21) and chips (23) are cut off by means of the laser (17).

10. An apparatus (29) for deburring a rotor disk (155), comprising:
an image capture unit (13) for capturing an image (11) of the rotor disk (155);
a laser (17); and
a control unit (37) which is connected to the image capture unit (13) and to the laser (17) and which is configured to determine an ACTUAL contour (49) of the rotor disk (155) based on the image (11) and to determine a DESIRED contour (51) on the basis of the ACTUAL contour (49),
**characterized in that**
the determination of the DESIRED contour (51) comprises elements (27) connected to a component edge (19), in particular burrs (21) and overlapping chips (23), being eliminated from the ACTUAL contour (49) by calculating out all the elements from the ACTUAL contour (46) which neither meet a minimum thickness nor belong to a long continuous structure, such as a component edge (19), and wherein the control unit (37) is configured to convert the DESIRED contour (51) into laser coordinates and to control the laser (17) on the basis of the laser coordinates for the deburring of the rotor disk (155).

## Revendications

1. Procédé d'ébavurage d'un composant de pompe à vide (15), comprenant les étapes suivantes consistant à :
(i) acquérir une image (11) du composant de pompe à vide (15) au moyen d'une unité d'acquisition d'image (13) ;
(ii) déterminer un contour RÉEL (49) du composant de pompe à vide (15) en se basant sur l'image (11) ;
(iii) déterminer un contour CIBLE (51) sur la base du contour RÉEL (49) ;
(iv) convertir le contour CIBLE (51) en coordonnées laser ; et
(v) ébavurer le composant de pompe à vide (15) au moyen d'un laser (17) sur la base des coordonnées laser,
**caractérisé en ce que**
le composant de pompe à vide (15) est un disque de rotor (155), et **en ce que**
la détermination du contour CIBLE (51) comprend l'élimination des éléments (27) liés à un bord de composant (19), en particulier des bavures (21) et des copeaux (23) en chevauchement, hors du contour RÉEL (49), en soustrayant du contour RÉEL (46) tous les éléments qui ne satisfont pas à une épaisseur minimale ou n'appartiennent pas à une longue structure cohérente, comme par exemple un bord de composant (19).

2. Procédé selon la revendication 1,
**caractérisé en ce que**
le composant de pompe à vide (15) est exposé à la lumière pendant l'acquisition de l'image.

3. Procédé selon la revendication 1 ou 2,
**caractérisé en ce que**
la détermination du contour RÉEL (49) comprend l'augmentation du contraste de l'image acquise (11).

4. Procédé selon l'une au moins des revendications précédentes, **caractérisé en ce que**
la détermination du contour RÉEL (49) comprend la détection des bords de composant (19), des bavures (21) et des copeaux (23) dans l'image acquise (11).

5. Procédé selon l'une au moins des revendications précédentes, **caractérisé en ce que**
une position du composant de pompe à vide (15) est déterminée sur la base du contour RÉEL (49).

6. Procédé selon l'une au moins des revendications précédentes, **caractérisé en ce que**
le contour RÉEL (49) est déterminé à l'aide d'un algorithme de détection de bords non sélectif.

7. Procédé selon l'une au moins des revendications précédentes, **caractérisé en ce que**
la détermination du contour CIBLE (51) comprend l'élimination des éléments (25) séparés d'un bord de composant (19), en particulier des bavures (21) et des copeaux (23), hors du contour RÉEL (49).

8. Procédé selon l'une au moins des revendications précédentes, **caractérisé en ce que**
le contour CIBLE (51) est déterminé à l'aide d'un algorithme d'érosion.

9. Procédé selon l'une au moins des revendications précédentes, **caractérisé en ce que**
les bavures (21) et les copeaux (23) sont séparés au moyen du laser (17).

10. Dispositif (29) pour ébavurer un disque de rotor (155), comprenant :
une unité d'acquisition d'image (13) pour acquérir une image (11) du disque de rotor (155),
un laser (17), et
une unité de commande (37) qui est connectée à l'unité d'acquisition d'image (13) et au laser (17) et qui est réalisée pour déterminer un contour RÉEL (49) du disque de rotor (15) en se basant sur l'image (11) et pour déterminer un contour CIBLE (51) sur la base du contour RÉEL (49),
**caractérisé en ce que**
la détermination du contour CIBLE (51) comprend l'élimination des éléments (27) liés à un bord de composant (19), en particulier des bavures (21) et des copeaux (23) en chevauchement, hors du contour RÉEL (49), en soustrayant du contour RÉEL (46) tous les éléments qui ne satisfont pas à une épaisseur minimale ou n'appartiennent pas à une longue structure cohérente, comme par exemple un bord de composant (19), et
l'unité de commande (37) est réalisée pour convertir le contour CIBLE (51) en coordonnées laser et pour piloter le laser (17) sur la base des coordonnées laser afin d'ébavurer le disque de rotor (155).
